# EUROPEAN PATENT SPECIFICATION

(11) **EP 2 813 364 B1**
(45) Date of publication and mention of the grant of the patent: **19.04.2017**
(21) Application number: 14171990.6
(22) Date of filing: 11.06.2014
(51) Int. Cl.: B41F 33/00, H04N 1/60, H04N 1/387

(54) **Calibration data generation apparatus, method, and program**
Kalibrierungsdatenerzeugungsvorrichtung, -verfahren, und -programm
Appareil, procédé et programme de génération de données d'étalonnage

(30) Priority: 14.06.2013 JP 2013125796
(43) Date of publication of application: 17.12.2014
(73) Proprietor: Fujifilm Corporation, Minato-ku Tokyo 106-8620 (JP)
(72) Inventor: Shimizu, Ryo, Tokyo 107-0052 (JP)
(74) Representative: Klunker . Schmitt-Nilson . Hirsch

(56) References cited:
- EP-A1- 0 518 559
- EP-A1- 2 506 558
- JP-B2- 4 165 071

## Description

### BACKGROUND OF THE INVENTION

### 1. Field of the Invention

The present invention relates to a calibration data generation apparatus according to the preamble of claim 1. Further, it relates to a method, and a program which generate, on the basis of print data for forming at least one content image on a printing plate or a printing medium with a first size, calibration data for forming a calibration image on a calibration medium with a second size smaller than the first size.

### 2. Description of the Related Art

For example, in offset printing, printing devices have been operated according to domestic and international standards as a part of quality control (QC). For example, according to International Standard Organization (ISO) 12647-2, an allowable error or a tone curve is given as an example of an item for evaluating the accuracy management of colors.

In recent years, in the proof of a printing system (so-called digital printing) which directly produces a printed matter from print data (for example, plate making data), similarly, the importance of accuracy management according to the standard, such as ISO, has been recognized. Various techniques have been proposed which print a content image to be calibrated and a color patch group (hereinafter, referred to as a media wedge) for color measurement during proof printing.

JP4165071B (for example, Abstract and Figs. 1 to 6) discloses a method for arranging a media wedge suitable for a printer (for example, an offset printer) having an ink key.

A calibration data generating apparatus according to the preamble of claim 1 is known from EP 0 518 559 A1.

### SUMMARY OF THE INVENTION

However, in some cases, a calibration image should be formed on a sheet with a size smaller than an output size used in the actual printing due to, for example, the functional constraints of the proof press. In this case, it is difficult to use print data as calibration data for calibration printing without any change.

For example, as shown in Figs. 2 and 6 of JP4165071B, when the media wedge is arranged at the end of the printing sheet, the media wedge should be removed from a calibration printing region due to size restrictions. That is, it is difficult to perform color proof using the media wedge, depending on the arrangement of the content image to be printed.

The invention has been made in order to solve the above-mentioned problems and an object of the invention is to provide a calibration data generation apparatus, a method, and a program which can efficiently arrange a calibration image and a media wedge even on a calibration medium that has a relatively small size.

According to an aspect of the invention, there is provided a calibration data generation apparatus with the features of claim 1.

As such, a portion of the first image region indicated by the print data is extracted and one trim image is cut out as the calibration image. The cutout trim image is arranged in the second image region indicated by the calibration data and the media wedge image including a plurality of patches is arranged in the vicinity of the trim image. Therefore, it is possible to efficiently arrange the calibration image and the media wedge even on the calibration medium that has a relatively small size.

The first image region may include a plurality of page regions, and the image cutting unit may extract two or more page regions among the plurality of page regions and cut out the one trim image including two or more page images.

The calibration data generation apparatus may further include a size determination unit that determines, as the second size, a minimum size capable of arranging the trim image and the media wedge image among a plurality of sizes that can be selected as the size of the calibration medium.

When the trim image has a rectangular image region, the image arrangement unit may arrange the media wedge image along any one of the sides of the trim image.

According to another aspect of the invention, there is provided a calibration data generation method with the features of claim 5.

According to another aspect of the invention, there is provided a calibration data generation program with the features of claim 6.

According to the calibration data generation apparatus, the method, and the program of the invention, a portion of the first image region indicated by the print data is extracted and one trim image is cut out as the calibration image The cutout trim image is arranged in the second image region indicated by the calibration data and the media wedge image including a plurality of patches is arranged in the vicinity of the trim image. Therefore, it is possible to efficiently arrange the calibration image and the media wedge even on the calibration medium that has a relatively small size.

### BRIEF DESCRIPTION OF THE DRAWINGS

Fig. 1 is a diagram illustrating the overall structure of a printed matter production system into which an image editing apparatus as a calibration data generation apparatus according to an embodiment is incorporated.
Fig. 2A is a schematic front view illustrating a printed matter shown in Fig. 1. Fig. 2B is a schematic front view illustrating a proof shown in Fig. 1.
Fig. 3 is an electrical block diagram illustrating the image editing apparatus shown in Fig. 1.
Fig. 4 is a flowchart illustrating the operation of the image editing apparatus shown in Figs. 1 and 3.
Fig. 5 is an image diagram illustrating a setting screen related to a media wedge.
Fig. 6 is a schematic diagram illustrating a first image region indicated by plate making data.
Fig. 7A is a diagram illustrating the relative positional relationship between arrangement regions. Fig. 7B is a schematic diagram illustrating a second image region indicated by calibration data.
Fig. 8 is a diagram illustrating another example of the relative positional relationship between the arrangement regions.

### DESCRIPTION OF THE PREFERRED EMBODIMENTS

Hereinafter, a preferred embodiment of the relationship between a calibration data generation apparatus and a program for implementing a calibration data generation method according to the invention will be described in detail with reference to the accompanying drawings.

### [Overall Structure of Printed Matter Production System 10]

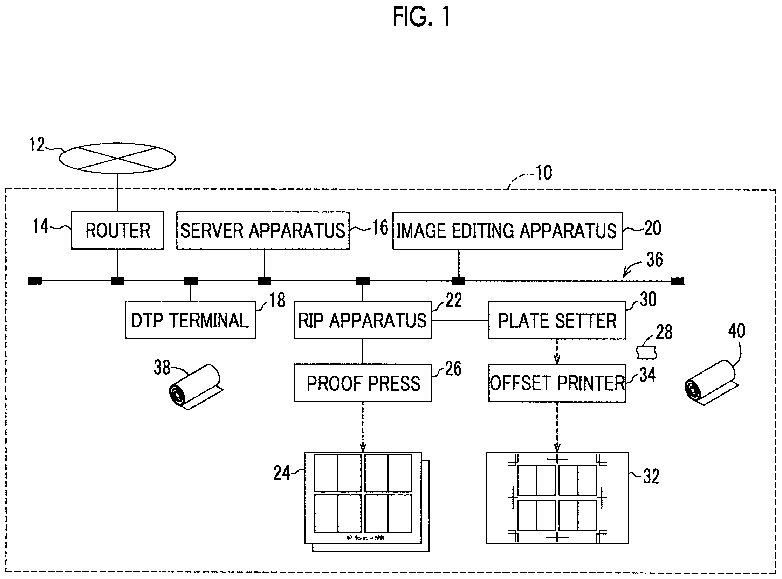

Fig. 1 is a diagram illustrating the overall structure of a printed matter production system 10 into which an image editing apparatus 20 as the calibration data generation apparatus according to this embodiment is incorporated.

The printed matter production system 10 includes a router 14 that relays connection with a network 12, a server apparatus 16 that can be accessed by each terminal apparatus (not shown) belonging to an external network through the network 12, a desktop publishing (DTP) terminal 18 that performs a DTP process including a process of editing data acquired from, for example, the server apparatus 16, an image editing apparatus 20 that imposes content data processed by the DTP terminal 18, a raster image processor (RIP) device 22 that performs image processing, such as a rasterizing process or a color conversion process, on the basis of output data imposed by the image editing apparatus 20, a proof press 26 that can print a proof 24 on the basis of calibration data transmitted from the RIP device 22, a plate setter 30 that makes a printing plate 28 on the basis of plate making data transmitted from the RIP device 22, and an offset printer 34 that is provided with the printing plate 28 and can form a printed matter 32.

The server apparatus 16 is a core apparatus in the workflow management of the printed matter production system 10. The server apparatus 16 is connected to each terminal apparatus of the designer and/or the production company (which are not shown) through the router 14 and the network 12 so as to communicate therewith. In addition, the server apparatus 16 is connected to the DTP terminal 18, the image editing apparatus 20, and the RIP device 22 through a local area network (LAN) 36 constructed in the printed matter production system 10 so as to communicate therewith.

That is, the server apparatus 16 is configured so as to perform the functions of a file server that stores and transmits various data files, the functions of an authority management server that manages task authority which can be executed in each terminal apparatus, each user, or each print job, or the functions of a mail server that generates and distributes notification mail at a predetermined time, such as the start or end of each process.

Various data files which can be managed by the file server include, for example, content data, print data (for example, plate making data, printing plate data, or calibration data), a job ticket {for example, a job definition format (JDF) file}, an international color consortium (ICC) profile, and color chart data.

The DTP terminal 18 performs a preflight process for content data including, for example, characters, figures, designs, or photographs and generates image data for each page. The image editing apparatus 20 performs an imposition process corresponding to a designated filing method or a designated paper folding method with reference to tag information of the job ticket.

The RIP device 22 functions as a printing server for at least one type of printer. In the example shown in Fig. 1, the RIP device 22 is connected to the proof press 26 and the plate setter 30 so as to communicate therewith. In this case, the RIP device 22 converts data with a PDL format which is described by a page description language (hereinafter, referred to as page description data) into output data suitable for each output device and supplies the output data to the proof press 26 or the plate setter 30.

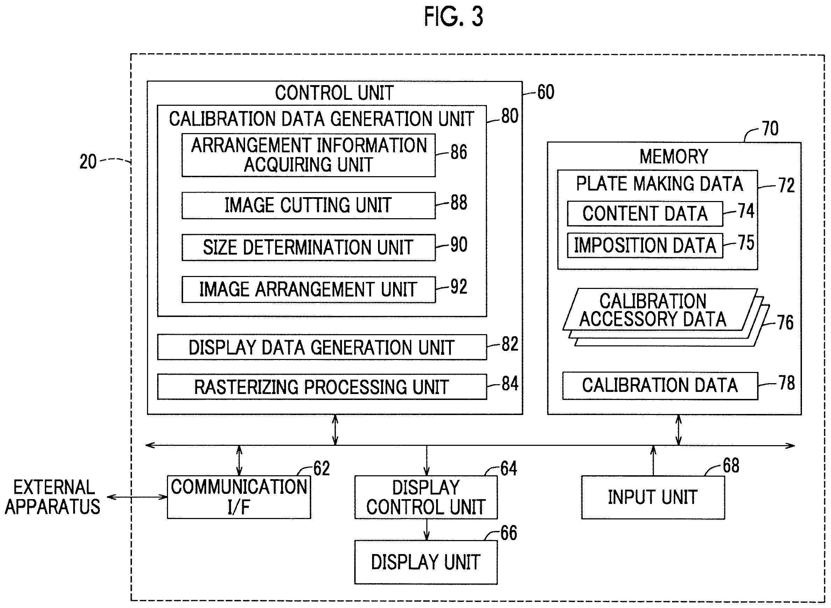

The proof press 26 outputs the proof 24 in which an image is formed on a proof sheet 38 (calibration medium) on the basis of calibration data 78 (Fig. 3) supplied from the RIP device 22. For example, direct digital color proofing (DDCP), an ink-jet color proofer, a low-resolution color laser printer (electrophotographic type), or an ink-jet printer may be used as the proof press 26.

The offset printer 34 attaches ink to one surface or both surfaces of a printing sheet 40, which is an example of a printing medium, through the printing plate 28 and an intermediate transfer body (not shown) and outputs a printed matter 32 in which an image is formed on the printing sheet 40. A digital printer for direct printing may be used instead of the offset printer 34. Examples of the digital printer include an ink-jet printer, a wide format printer, an ink-jet color proofer, and a color laser printer.

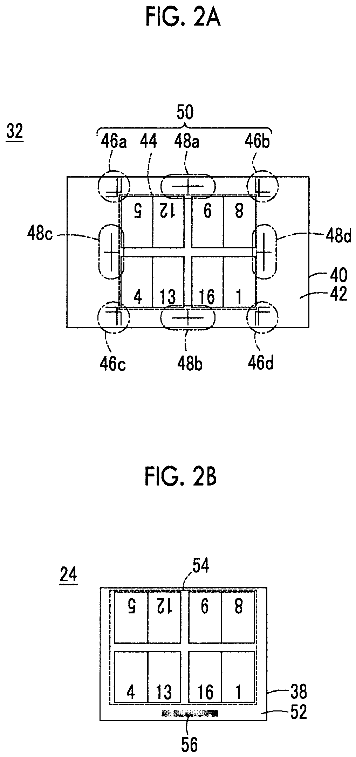

Fig. 2A is a schematic front view illustrating the printed matter 32 shown in Fig. 1. As shown in Fig. 2A, a plate surface 44 indicating drafts of contents of eight pages, four corner marks 46a to 46d which are register marks during printing, and four fold marks 48a to 48d are formed on a printing surface 42 of the printing sheet 40. Hereinafter, in some cases, an aggregate of one or a plurality of content images arranged on the printing surface 42 is referred to as a content image group 50.

Fig. 2B is a schematic front view illustrating the proof 24 shown in Fig. 1. As shown in Fig. 2B, a calibration image 54 to be calibrated and a media wedge 56 including a plurality of patches are formed on a printing surface 52 of the proof sheet 38. In general, the media wedge 56 is also called a control strip or a color bar. The color of the patch or the number of patches can be arbitrarily set and it is preferable that color accuracy management be performed by a standard, such as ISO or Fogra Graphic Technology Research Association (FOGRA).

As can be seen from Figs. 2A and 2B, the proof 24 has a smaller size than the printed matter 32 (Here, the size means the length of a side or an area). In addition, the drawing form of the calibration image 54 is substantially identical to that of the plate surface 44 shown in Fig. 2A. That is, the use of the proof 24 makes it possible to calibrate a specific image of the content image group 50, that is, the plate surface 44.

### [Electrical Block Diagram of Image Editing Apparatus 20]

Fig. 3 is an electrical block diagram illustrating the image editing apparatus 20 shown in Fig. 1. The image editing apparatus 20 is a computer including a control unit 60, a communication I/F 62, a display control unit 64, a display unit 66, an input unit 68, and a memory 70 (storage medium).

The communication I/F 62 is an interface (I/F) for transmitting and receiving electric signals to and from an external device. The image editing apparatus 20 can acquire various kinds of data, for example, calibration accessory data 76 from the server apparatus 16 (Fig. 1) and can supply various kinds of data, for example, imposition data 75 to the server apparatus 16.

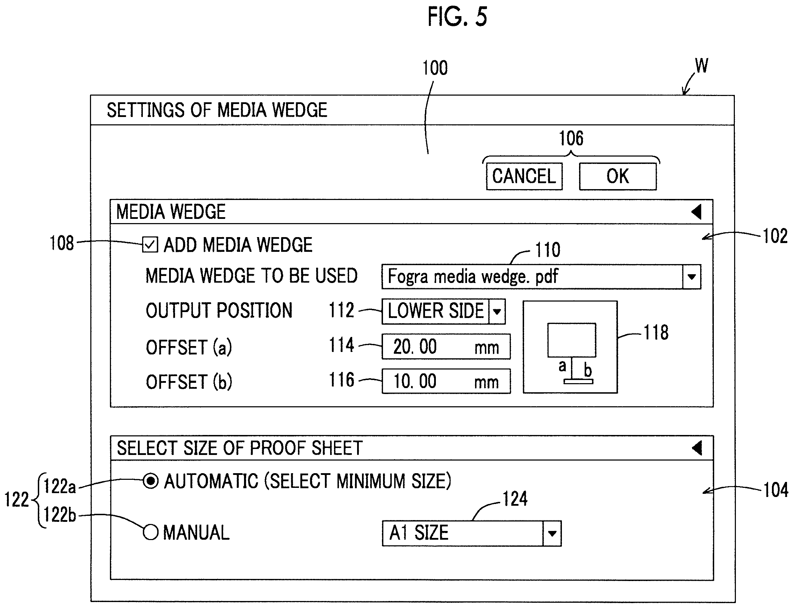

The display control unit 64 is a control circuit which controls the driving of the display unit 66 under the control of the control unit 60. The display control unit 64 outputs a display control signal to the display unit 66 through an I/F (not shown) and the display unit 66 is driven. Then, the display unit 66 can display various images including a window W (see Fig. 5).

The input unit 68 includes various input devices, such as a mouse, a trackball, a keyboard, and a touch panel. The display function of the display unit 66 and the input function of the input unit 68 are combined to form a user interface.

The memory 70 stores, for example, a program and data required for the control unit 60 to control each component. In the example shown in Fig. 3, the memory 70 stores plate making data 72 which serves as print data including content data 74 and the imposition data 75, at least one kind of calibration accessory data 76, and the calibration data 78.

The memory 70 may be a non-transitory and computer readable storage medium. Examples of the computer readable storage medium include a portable medium, such as a magneto-optical disk, a ROM, a CD-ROM, or a flash memory, and a storage device, such as a hard disk provided in a computer system. The storage medium may dynamically store a program in a short time or it may store the program for a predetermined period of time.

The control unit 60 is formed by a processor, such as a central processing unit (CPU). The control unit 60 reads the program stored in the memory 70 and executes the program to implement the functions of a calibration data generation unit 80, a display data generation unit 82, and a rasterizing processing unit 84.

The calibration data generation unit 80 generates the calibration data 78, which is output data used for calibration, on the basis of the plate making data 72 which is generated in advance. Specifically, the calibration data generation unit 80 includes an arrangement information acquiring unit 86 that acquires predetermined arrangement information, an image cutting unit 88 that cuts out a portion of an image region indicated by the plate making data 72, a size determination unit 90 that determines the size of the proof sheet 38 used for calibration, and an image arrangement unit 92 that arranges the calibration image 54 and the media wedge 56 (see Fig. 2B) at predetermined positions.

The display data generation unit 82 generates display data for displaying the window W (see Fig. 5) including a setting screen 100 on the display unit 66.

The rasterizing processing unit 84 performs a rasterizing process for the imposed page description data. The rasterizing process includes a data format conversion process for converting a data format from a PDL format to a raster format and a color matching process using an ICC profile.

### [Operation of Image Editing Apparatus 20]

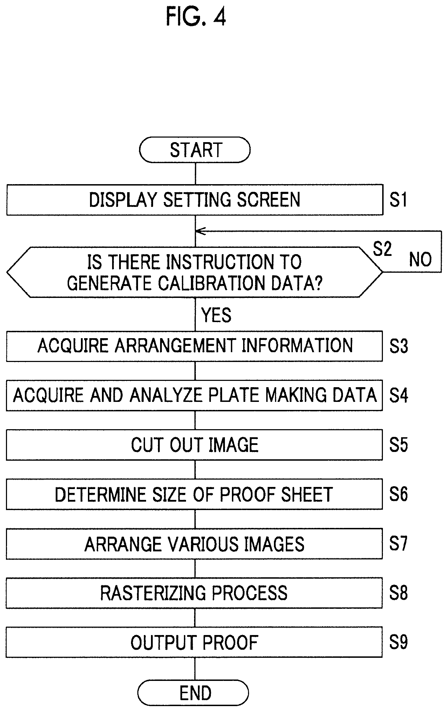

The image editing apparatus 20 as the calibration data generation apparatus according to this embodiment has the above-mentioned structure. Then, the operation of the image editing apparatus 20 shown in Figs. 1 and 3 will be described in detail while mainly referring to the flowchart shown in Fig. 4.

In Step S1, the image editing apparatus 20 displays the setting screen 100 used to generate the calibration data 78. The display data generation unit 82 generates display data for the setting screen 100 in response to an instruction to start setting and supplies the display data to the display control unit 64. The display control unit 64 displays the window W including the setting screen 100 on the display unit 66.

As shown in Fig. 5, a first setting field 102, a second setting field 104, and a button group 106 represented by [OK] and [Cancel] are arranged on the setting screen 100. The operator as the user can operate the input unit 68 to set various values through the first setting field 102 or the second setting field 104.

One check box 108, two pull-down menus 110 and 112, two text boxes 114 and 116, and one illustration image 118 are provided in the first setting field 102. A pair of radio buttons 122 (radio buttons 122a and 122b) and one pull-down menu 124 are provided in the second setting field 104.

In Step S2, the control unit 60 determines whether there is an instruction to generate the calibration data 78. Specifically, the control unit 60 determines whether an operation of clicking the button group 106 (specifically, the [OK] button) in the setting screen 100 (Fig. 5) is received. When the operation has not been received, the process stays in Step S2 until the operation is received. On the other hand, when the operation is received, the process proceeds to the next step (S3).

In Step S3, the arrangement information acquiring unit 86 acquires information (hereinafter, referred to as arrangement information) indicating the arrangement relationship between the calibration image 54 and the media wedge 56. The arrangement information acquiring unit 86 acquires information input from the first setting field 102. As shown in Fig. 5, it is assumed that "Fogra-media-wedge.pdf" is acquired from the pull-down menu 110, "lower side" is acquired from the pull-down menu 112, "20.00" (unit: mm) is acquired from the text box 114, and "10.00" (unit: mm) is acquired from the text box 116.

In Step S4, the calibration data generation unit 80 acquires the plate making data 72 to be calibrated and analyzes the acquired plate making data 72. Prior to the analysis, the calibration data generation unit 80 reads and acquires, for example, the plate making data 72 stored in the memory 70. Then, the calibration data generation unit 80 analyzes an image format (for example, the size of the printing sheet 40, or the shape, color, position, or direction of each content item) indicated by the plate making data 72 with reference to the content of the content data 74 and the imposition data 75.

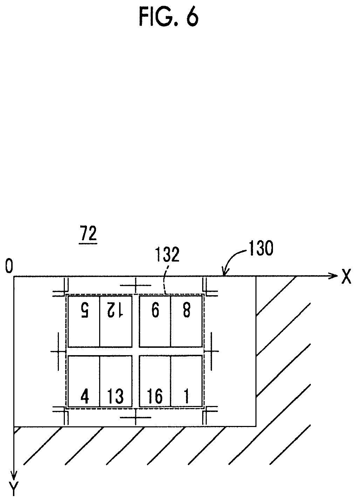

Fig. 6 is a schematic diagram illustrating a first image region 130 indicated by the plate making data 72. In the example shown in Fig. 6, a two-dimensional position on the printing surface 42 (Fig. 2A) is defined by the origin O which is the upper left corner of the printed matter 32 (Fig. 2A), the X-axis which is the longitudinal direction of the printed matter 32, and the Y-axis which is the lateral direction of the printed matter 32. The first image region 130 is an image region defined by the plate making data 72 and corresponds to the size of the printing plate 28 or the printing sheet 40, that is, a first size. A hatched region is an image region which is not defined by the plate making data 72.

In Step S5, the image cutting unit 88 extracts a portion of the first image region 130 which is analyzed in Step S4 and cuts out an image corresponding to the extracted region. The image cutting unit 88 extracts a portion of the first image region 130 such that the extracted region includes two or more of page regions among a plurality of page regions included in the first image region 130. In the example shown in Fig. 6, the first image region 130 includes eight page regions. In this embodiment, a rectangular region corresponding to the plate surface 44 including all of eight page regions shown in Fig. 2A is extracted. Hereinafter, the extracted region is referred to as a trim region 132.

For example, the trim region 132 may be designated by the following method: a method which detects the shape and position of register marks (the corner marks 46a to 46d in Fig. 2A) in the first image region 130 and designates an estimated region; or a method which designates the trim region using a manual operation through the input unit 68 shown in Fig. 3. Here, only a partial region required for a calibration operation can be selected and designated to reduce the size of the proof sheet 38.

Then, the image cutting unit 88 cuts out one image or two or more images corresponding to the trim region 132. In this embodiment, since the image cutting unit 88 extracts one trim region 132 including two or more page regions, it cuts out one trim image 152 including two or more page images, which will be described below. The data format of the trim image 152 may be page description data or data with a raster format.

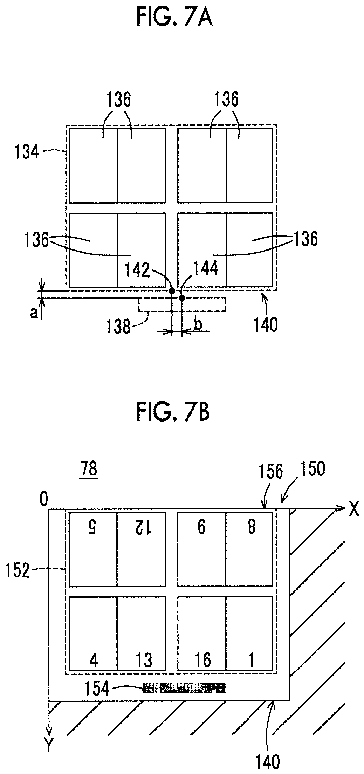

In Step S6, the size determination unit 90 determines the size of the proof sheet 38 used for calibration, that is, a second size. The determination method varies depending on the content set in the second setting field 104 shown in Fig. 5. For example, when the radio button 122a is selected, the size determination unit 90 automatically determines the size of the proof sheet 38. Next, the determination method will be described in detail with reference to Fig. 7A.

The size determination unit 90 acquires arrangement information required for the determination process from the arrangement information acquiring unit 86 in advance. Here, arrangement information indicating that an output position is "lower side", a first offset (a) is 20 mm, and a second offset (b) is 10 mm is acquired. In addition, calibration accessory data 76 with a file name "Fogra-media-wedge.pdf" is acquired.

Fig. 7A is a diagram illustrating the relative positional relationship between arrangement regions 134 and 138. The arrangement region 134, which is the larger one of the two arrangement regions, has the same size as the trim region 132 shown in Fig. 6. The trim region 132 shown in Fig. 6 corresponds to the calibration image 54 shown in Fig. 2B. The arrangement region 134 includes eight page regions 136. The arrangement region 138, which is the smaller one of the two arrangement regions, has the same size as the image region indicated by only one selected calibration accessory data item 76. The image region indicated by the one selected calibration accessory data 76 corresponds to the media wedge 56 shown in Fig. 2B.

When the output position is "lower side", one point (for example, a midpoint) on a lower side 140 of the arrangement region 134 is set as a reference point 142. Similarly, one point (for example, a midpoint) on one side (specifically, an upper long side) of the arrangement region 138 is set as a reference point 144. In this case, the arrangement relationship between the arrangement regions 134 and 138 is specified by the reference points 142 and 144 and the offsets (a and b). The offsets (a and b) in the image region correspond to a value obtained by converting a length (mm) into the number of pixels. Here, the first offset (a) corresponds to a component in the up-down direction and the second offset (b) corresponds to a component in the left-right direction. It is noted that the illustration image 118 shown in Fig. 5 schematically indicates the definition of the offsets (a and b).

Then, the size determination unit 90 determines, as the size of the proof sheet 38, a minimum size capable of arranging the calibration image 54 and the media wedge 56 from a plurality of sizes which can be selected as the size of the proof sheet 38. Specifically, when there is a size including both the arrangement regions 134 and 138, the size is selected. When there are two or more sizes, the smallest size is selected.

A process of determining the size of the proof sheet 38 is not limited to the automatic size determination process. For example, when the radio button 122b shown in Fig. 5 is selected, the size determination unit 90 determines the size designated by the pull-down menu 124 (an "A1 size" in the example shown in Fig. 5) as the size of the proof sheet 38. As such, the size of the proof sheet 38 may be determined by the manual operation of the operator.

In Step S7, the image arrangement unit 92 arranges the trim image 152 and a media wedge image 154 in an image region (hereinafter, referred to as a second image region 150) corresponding to the size determined in Step S6.

Fig. 7B is a schematic diagram illustrating the second image region 150 indicated by the calibration data 78. In the example shown in Fig. 7B, a two-dimensional position on the printing surface 52 shown in Fig. 2B is defined by the origin O which is the upper left corner of the proof 24 shown in Fig. 2B, the X-axis which is the longitudinal direction of the proof 24, and the Y-axis which is the lateral direction of the proof 24. In this embodiment, the second image region 150 is an image region defined by the calibration data 78 and corresponds to the size of the proof sheet 38, that is, the second size. A hatched region is an image region that is not defined by the calibration data 78.

The trim image 152 corresponding to the calibration image 54 shown in Fig. 2B and the media wedge image 154 corresponding to the media wedge 56 are arranged in the second image region 150 according to the arrangement relationship shown in Fig. 7A. The trim image 152 is arranged along another side 156 (X-axis) opposite to the one side 140. The media wedge image 154 is arranged below the trim image 152.

Then, the calibration data generation unit 80 generates the calibration data 78 indicating the drawing format shown in Fig. 7B and temporarily stores the calibration data 78 in the memory 70. Then, the image editing apparatus 20 transmits the calibration data 78 to the RIP device 22 through the communication I/F 62.

In Step S8, the RIP device 22 performs the rasterizing process suitable for the proof press 26 for the calibration data 78 generated in Step S7 to obtain raster data and supplies the obtained raster data to the proof press 26.

In Step S9, the proof press 26 outputs a desired proof 24 on the basis of the raster data generated in Step S8. As shown in Fig. 2B, not only the calibration image 54 to be calibrated but also the media wedge 56 for color accuracy management is formed on the printing surface 52 of the proof 24. In addition, as shown in the illustration image 118 of Fig. 5, the calibration image 54 and the media wedge 56 are arranged such that the positional relationship of the offsets (a, b) = (20 mm, 10 mm) is satisfied.

In this way, the operation of the image editing apparatus 20 when the calibration data 78 is generated is completed. Then, the operator can use the media wedge 56 to correct the color of the proof 24. For example, the color of each patch forming the media wedge 56 may be measured and it may be determined whether the obtained color measurement value is close to a target color value.

However, the arrangement of the media wedge 56 is not limited to the example shown in Fig. 2B, but may be changed to other positions. The operator can select the output position (for example, the right, up, or left side) other than the "lower side" in the pull-down menu 112 shown in Fig. 5 to simply change the arrangement of the media wedge 56.

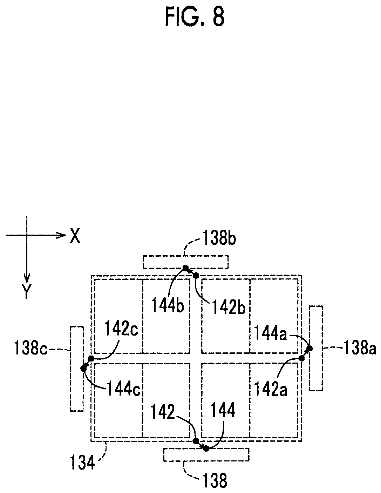

Fig. 8 is a diagram illustrating the relative position relationship between the arrangement regions 134 and 138 (138a to 138c). The definition of the arrangement regions 134 and 138 and the reference points 142 and 144 is the same as that in Fig. 7A and the description thereof will not be repeated.

When the output position is the "right side", a reference point 142a corresponds to a midpoint of the right side of the arrangement region 134. Similarly, a reference point 144a corresponds to a midpoint of the left side of the arrangement region 138a which is elongated in the up-down direction. Here, the first offset (a) corresponds to a position in the left-right direction and the second offset (b) corresponds to a component in the up-down direction.

When the output position is the "upper side", a reference point 142b corresponds to a midpoint of the right side of the arrangement region 134. Similarly, a reference point 144b corresponds to a midpoint of the lower long side of the arrangement region 138b which is elongated in the left-right direction. Here, the first offset (a) corresponds to a component in the up-down direction and the second offset (b) corresponds to a component in the left-right direction.

When the output position is the "left side", a reference point 142c corresponds to a midpoint of the left side of the arrangement region 134. Similarly, a reference point 144c corresponds to a midpoint of the right side of the arrangement region 138c which is elongated in the up-down direction. Here, the first offset (a) corresponds to a component in the left-right direction and the second offset (b) corresponds to a component in the up-down direction.

When the trim image 152 has a rectangular image region according to the above-mentioned definition, the image arrangement unit 92 arranges the media wedge image 154 along any one of the sides of the trim image 152 in Step S7. Therefore, it is possible to efficiently arrange two images and to set the size of the proof sheet 38 to a very small value.

In the example shown in Fig. 5, even when the output position is different in the up-down direction or the left-right direction, it is possible to perform common user control, that is, to input the offset through the text boxes 114 and 116. The content of the illustration image 118 may be changed so as to follow a change in the designated content of the pull-down menu 112. In this case, the illustration image 118 schematically represents the definition of the offsets (a and b) at the output position which is designated at the present time. According to this structure, it is possible to understand the definition of parameters at a glance and to achieve a user-friendly setting operation.

### [Effect of the Invention]

As described above, the image editing apparatus 20 generates the calibration data 78 for forming the calibration image 54 on the proof sheet 38 with the second size smaller than the first size, on the basis of the plate making data 72 for forming at least one content image, that is, the content image group 50 on the printing plate 28 or the printing sheet 40 with the first size.

The image editing apparatus 20 includes the image cutting unit 88 that extracts a portion of the first image region 130 indicated by the plate making data 72, that is, the trim region 132 and cuts out one trim image 152 as the calibration image 54 and the image arrangement unit 92 that arranges the cutout trim image 152 in the second image region 150 indicated by the calibration data 78 and arranges the media wedge image 154 including a plurality of patches in the vicinity of the trim image 152. According to this structure, it is possible to efficiently arrange the calibration image 54 and the media wedge 56 even on the proof sheet 38 that has a relatively small size.

The invention is not limited to the above-described embodiment, but various modifications and changes of the invention can be made without departing from the scope of the invention.

For example, in this embodiment, the output of the proof 24, that is, a so-called hard copy is given as an example of the proof output. However, the invention is not limited thereto. An output format in which data is displayed on a display device, such as the display unit 66 shown in Fig. 3, that is, a so-called soft copy may be used.

## Claims

1. A calibration data generation apparatus (20) that generates, on the basis of print data for forming at least one content image on a printing plate (28) or a printing medium (40) with a first size, calibration data for forming a calibration image (54) on a calibration medium (38) with a second size smaller than the first size, **characterized by**
an image cutting unit (88) that extracts a portion of a first image region (130) indicated by the print data (72) and cuts out one trim image (152) as the calibration image (54);
an image arrangement unit (92) that arranges the trim image (152) which is cut out by the image cutting unit (88) in a second image region (150) indicated by the calibration data and arranges a media wedge image (154) including a plurality of patches in the vicinity of the trim image (152); and
an arrangement information acquiring unit (86) that acquires arrangement information indicating an arrangement relationship between the trim image (152) and the media wedge image (154),
wherein the image arrangement unit (92) arranges the trim image (152) and the media wedge image (154) according to the arrangement relationship which is specified by the arrangement information acquired by the arrangement information acquiring unit (86).

2. The calibration data generation apparatus (20) according to claim 1,
wherein the first image region (130) includes a plurality of page regions (136), and
the image cutting unit (88) extracts two or more page regions among the plurality of page regions (136) and cuts out the one trim image (152) including two or more page images.

3. The calibration data generation apparatus (20) according to claim 1 or 2, further comprising:
a size determination unit (90) that determines, as the second size, a minimum size capable of arranging the trim image (152) and the media wedge image (154) among a plurality of sizes that can be selected as the size of the calibration medium (38).

4. The calibration data generation apparatus (20) according to any one of claims 1 to 3,
wherein, when the trim image (152) has a rectangular image region, the image arrangement unit (92) arranges the media wedge image (154) along any one of the sides of the trim image (152).

5. A calibration data generation method that generates, on the basis of print data for forming at least one content image on a printing plate (28) or a printing medium (40) with a first size, calibration data for forming a calibration image (54) on a calibration medium (38) with a second size smaller than the first size, **characterized by**
a cutting step of extracting a portion of a first image region (130) indicated by the print data and cutting out one trim image (152) as the calibration image (54);
an arrangement step of arranging the cutout trim image (152) in a second image region (150) indicated by the calibration data and arranging a media wedge image (154) including a plurality of patches in the vicinity of the trim image (152); and
an arrangement information acquiring step that acquires arrangement information indicating an arrangement relationship between the trim image and the media wedge image,
wherein the arrangement step arranges the trim image and the media wedge image according to the arrangement relationship which is specified by the arrangement information.

6. A calibration data generation program that, when running on a computer, generates, on the basis of print data for forming at least one content image on a printing plate (28) or a printing medium (40) with a first size, calibration data for forming a calibration image (54) on a calibration medium (38) with a second size smaller than the first size and causes a computer to perform:
a cutting step of extracting a portion of a first image region (130) indicated by the print data and cutting out one trim image (152) as the calibration image (54);
an arrangement step of arranging the cutout trim image (152) in a second image region (150) indicated by the calibration data and arranging a media wedge image (154) including a plurality of patches in the vicinity of the trim image (152); and
an arrangement information acquiring step that acquires arrangement information indicating an arrangement relationship between the trim image and the media wedge image,
wherein the arrangement step arranges the trim image and the media wedge image according to the arrangement relationship which is specified by the arrangement information.

## Patentansprüche

1. Kalibrierdaten-Erzeugungsvorrichtung (20), die auf der Grundlage von Druckdaten zum Bilden mindestens eines Kontentbilds auf einer Druckplatte (28) oder einem Druckmedium (40) mit einer ersten Größe, Kalibrierdaten zum Erstellen eines Kalibrierbilds (54) auf einem Kalibriermedium (38) mit einer zweiten Größe, die kleiner als die erste Größe ist, erzeugt, **gekennzeichnet durch**
eine Bildausschneideeinheit (88), die einen Teil einer ersten Bildzone (130), welche **durch** die Druckdaten (72) angegeben wird, extrahiert und als Kalibrierbild (54) ein Schnittbild (152) ausschneidet;
eine Bildanordnungseinheit (92), die das Schnittbild (152), welches von der Bildausschneideeinheit (88) ausgeschnitten wurde, in einer **durch** die Kalibrierdaten angegebenen zweiten Bildzone (150) anordnet und ein Medienkeilbild (154), das mehrere Felder enthält, in der Nähe des Schnittbilds (152) anordnet; und
eine Anordnungsinformations-Erfassungseinheit (86), die Anordnungsinformation erfasst, welche eine Anordnungsbeziehung zwischen dem Schnittbild (152) und dem Medienkeilbild (154) angibt,
wobei die Bildanordnungseinheit (95) das Schnittbild (152) und das Medienkeilbild (154) gemäß der Anordnungsbeziehung anordnet, die spezifiziert ist **durch** die von der Anordnungsinformations-Erfassungseinheit (86) erfasste Anordnungsinformation.

2. Kalibrierdaten-Erzeugungsvorrichtung (20) nach Anspruch 1,
bei der die erste Bildzone (130) mehrere Seitenzonen (136) enthält, und
die Bildausschneideeinheit (88) zwei oder mehr Seitenzonen unter den mehreren Seitenzonen (136) extrahiert und das eine Schnittbild (152), das zwei oder mehr Seitenbilder enthält, ausschneidet.

3. Kalibrierdaten-Erzeugungsvorrichtung (20) nach Anspruch 1 oder 2, weiterhin umfassend:
eine Größenbestimmungseinheit (90), die als die zweite Größe eine Minimumgröße bestimmt, die in der Lage ist, das Schnittbild (152) und das Medienkeilbild (154) unter mehreren Größen anzuordnen, die als die Größe des Kalibriermediums (38) ausgewählt werden können.

4. Kalibrierdaten-Erzeugungsvorrichtung (20) nach einem der Ansprüche 1 bis 3,
bei der, wenn das Schnittbild (152) eine rechteckige Bildzone aufweist, die Bildanordnungseinheit (92) das Medienkeilbild (154) entlang einer der Seiten des Schnittbilds (152) anordnet.

5. Kalibrierdaten-Erzeugungsverfahren, welches auf der Grundlage von Druckdaten zum Bilden mindestens eines Kontentbilds auf einer Druckplatte (28) oder einem Druckmedium (40) einer ersten Größe, Kalibrierdaten zum Bilden eines Kalibrierbilds (54) auf einem Kalibriermedium (38) mit einer zweiten Größe, die kleiner als die erste Größe ist, erzeugt, **gekennzeichnet durch**
einen Ausschneideschritt zum Extrahieren eines Teils einer ersten Bildzone (130), welche **durch** die Druckdaten angegeben wird, und zum Ausschneiden eines Schnittbilds (152) als das Kalibrierbild (54);
einen Anordnungsschritt des Anordnens des ausgeschnittenen Schnittbilds (152) in einer zweiten Bildzone (150), welche **durch** die Kalibrierdaten angegeben wird, und Anordnen eines Medienkeilbilds (154), das mehrere Felder enthält, in der Nähe des Schnittbilds (152); und
einen Anordnungsinformations-Erfassungsschritt, welcher Anordnungsinformation, die eine Anordnungsbeziehung zwischen dem Schnittbild und dem Medienkeilbild angibt, erfasst,
wobei der Anordnungsschritt das Schnittbild und das Medienkeilbild gemäß der **durch** die Anordnungsinformation spezifizierten Anordnungsbeziehung anordnet.

6. Kalibrierdatenerzeugungsprogramm, das beim Laufen auf einem Computer auf der Grundlage von Printdaten zum Bilden mindestens eines Kontentbilds auf einer Druckplatte (28) oder einem Druckmedium (40) einer ersten Größe, Kalibrierdaten zum Bilden eines Kalibrierbilds (54) auf einem Kalibriermedium (38) mit einer zweiten Größe, die kleiner als die erste Größe ist, erzeugt und einen Computer veranlasst, folgendes auszuführen:
einen Ausschneideschritt zum Extrahieren eines Teils einer ersten Bildzone (130), welche durch die Druckdaten angegeben wird, und zum Ausschneiden eines Schnittbilds (152) als das Kalibrierbild (54);
einen Anordnungsschritt des Anordnens des ausgeschnittenen Schnittbilds (152) in einer zweiten Bildzone (150), welche durch die Kalibrierdaten angegeben wird, und Anordnen eines Medienkeilbilds (154), das mehrere Felder enthält, in der Nähe des Schnittbilds (152); und
einen Anordnungsinformations-Erfassungsschritt, welcher Anordnungsinformation, die eine Anordnungsbeziehung zwischen dem Schnittbild und dem Medienkeilbild angibt, erfasst,
wobei der Anordnungsschritt das Schnittbild und das Medienkeilbild gemäß der durch die Anordnungsinformation spezifizierten Anordnungsbeziehung anordnet.

## Revendications

1. Appareil de génération de données d'étalonnage (20) qui génère, sur la base de données d'impression pour former au moins une image de contenu sur une plaque
d'impression (28) ou un support d'impression (40) présentant une première taille, des données d'étalonnage pour former une image d'étalonnage (54) sur un support d'étalonnage (38) présentant une seconde taille inférieure à la première taille,
**caractérisé par**
une unité de coupe d'image (88) qui extrait une portion d'une première région d'image (130) indiquée par les données d'impression (72) et coupe une image de découpage (152) comme l'image d'étalonnage (54) ;
une unité d'agencement d'image (92) qui agence l'image de découpage (152) qui est coupée par l'unité de coupe d'image (88) dans une seconde région d'image (150) indiquée par les données d'étalonnage et agence une image de bande de contrôle (154) incluant une pluralité de carrés dans le voisinage de l'image de découpage (152) ;
une unité d'acquisition d'informations d'agencement (86) qui acquiert des informations d'agencement indiquant une relation d'agencement entre l'image de découpage (152) et l'image de bande de contrôle (154),
dans lequel l'unité d'agencement d'image (92) agence l'image de découpage (152) et l'image de bande de contrôle (154) en fonction de la relation d'agencement qui est spécifiée par les informations d'agencement acquises par l'unité d'acquisition d'informations d'agencement (86).

2. Appareil de génération de données d'étalonnage (20) selon la revendication 1,
dans lequel la première région d'image (130) inclut une pluralité de régions de page (136), et
l'unité de coupe d'image (88) extrait deux régions de page ou davantage parmi la pluralité de régions de page (136), et coupe la une image de découpage (152) incluant deux images de page ou davantage.

3. Appareil de génération de données d'étalonnage (20) selon la revendication 1 ou 2, comprenant en outre :
une unité de détermination de taille (90) qui détermine, comme la seconde taille, une taille minimale en mesure d'agencer l'image de découpage (152) et l'image de bande de contrôle (154) parmi une pluralité de tailles qui peuvent être sélectionnées comme la taille du support d'étalonnage (38).

4. Appareil de génération de données d'étalonnage (20) selon l'une quelconque des revendications 1 à 3,
dans lequel lorsque l'image de découpage (152) présente une région d'image rectangulaire, l'unité d'agencement d'image (92) agence l'image de bande de contrôle (154) le long de l'un quelconque des côtés de l'image de découpage (152).

5. Procédé de génération de données d'étalonnage qui génère, sur la base de données d'impression pour former au moins une image de contenu sur une plaque d'impression (28) ou un support d'impression (40) présentant une première taille, des données d'étalonnage pour former une image d'étalonnage (54) sur un support d'étalonnage (38) présentant une seconde taille inférieure à la première taille,
**caractérisé par**
une étape de coupe pour extraire une portion d'une première région d'image (130) indiquée par les données d'impression et couper une image de découpage (152) comme l'image d'étalonnage (54) ;
une étape d'agencement pour agencer l'image de découpage coupée (152) dans une seconde région d'image (150) indiquée par les données d'étalonnage et agencer une image de bande de contrôle (154) incluant une pluralité de carrés dans le voisinage de l'image de découpage (152), et
une étape d'acquisition d'informations d'agencement qui acquiert des informations d'agencement indiquant une relation d'agencement entre l'image de découpage et l'image de bande de contrôle,
dans lequel l'étape d'agencement agence l'image de découpage et l'image de bande de contrôle en fonction de la relation d'agencement qui est spécifiée par les informations d'agencement.

6. Programme de génération de données d'étalonnage qui, lors de son fonctionnement sur un ordinateur, génère, sur la base de données d'impression pour former au moins une image de contenu sur une plaque d'impression (28) ou un support d'impression (40) présentant une première taille, des données d'étalonnage pour former une image d'étalonnage (54) sur un support d'étalonnage (38) présentant une seconde taille inférieure à la première taille, et amène un ordinateur à exécuter :
une étape de coupe pour extraire une portion d'une première région d'image (130) indiquée par les données d'impression et couper une image de découpage (152) comme l'image d'étalonnage (54) ;
une étape d'agencement pour agencer l'image de découpage coupée (152) dans une seconde région d'image (150) indiquée par les données d'étalonnage et agencer une image de bande de contrôle (154) incluant une pluralité de carrés dans le voisinage de l'image de découpage (152), et
une étape d'acquisition d'informations d'agencement qui acquiert des informations d'agencement indiquant une relation d'agencement entre l'image de découpage et l'image de bande de contrôle,
dans lequel l'étape d'agencement agence l'image de découpage et l'image de bande de contrôle en fonction de la relation d'agencement qui est spécifiée par les informations d'agencement.
